# EUROPEAN PATENT APPLICATION

(11) **EP 2 957 452 A1**
(43) Date of publication of application: **23.12.2015**
(21) Application number: 15171814.5
(22) Date of filing: 12.06.2015
(51) Int. Cl.: B60N 2/01, B60N 2/68, B60N 2/24, B64D 11/06, B61D 33/00

(54) **PASSENGER SEAT WITH INCREASED KNEE CLEARANCE**

(30) Priority: 16.06.2014 TR 201406976
(71) Applicant: Anadolu Isuzu Otomotiv sanayi ve Ticaret Anonim Sirketi, Kocaeli (TR)
(72) Inventor: Bilgin, Cengizhan, Kocaeli (TR); Kayalioglu, Fatih, Kocaeli (TR); Kara, Caner, Kocaeli (TR)
(74) Representative: Dereligil, Ersin

(57) **Abstract**

The invention relates to a passenger seat (A) backrest carcass structure (1) comprising bottom support profile (9) which increases the strength of the framework structure by supporting the framework structure of the passenger seat (A) from bottom; movement axis (10) allowing the use of the vehicle seat in intended inclination by moving the vehicle seat forwards and backwards (10); and support bracket (11) strengthening the foam covered on the framework structure, characterized in that said passenger seat (A) comprises concave surfaces (16) formed on the backrest area of said passenger seat (A) in the knee clearance (15) corresponding to the knees of the passenger.

## Description

### Technical Field

The invention relates to the structure on the backrest area of the passenger seats used in passenger transporting vehicles such as plane, train, ship, bus, midibus and minibus.

The invention especially relates to an embodiment which aims to increase the knee clearance while the passengers are seated, and which provides alteration of the framework structure and foam form located on the backrest area of the seat.

### State of the Art

Today, especially in passenger vehicles, light commercial vehicles and other passenger transporting motor vehicles, there are many types of seats used by the passenger during transportation. The comfort provided to the passengers by the seats used in the passenger transporting vehicles is highly important. Especially, in long distance travels, the type of the seat used affects the comfort of the passenger quite a lot.

While the size of the seat and the quality of the coating used for the seat affects the comfort, the distance between two seats also affect comfort substantially. Especially in the seats where the clearance between two seats is short, when the passenger sits on the seat, his/her knees hit the seat in front and thus, the passenger becomes uncomfortable. This situation not only reduces comfort but also jeopardizes safety. In case of an emergency, passengers might not be able to leave due to the cramped space. The passenger, who cannot leave his/her seat, might get stuck between two seats due to lack of space.

In the existing systems, the backrest area of the passenger seats are formed as flat. As it is intended to place more seats into the limited area within the vehicle, the clearance between the seats is low. As the clearance between the seats is low and the backrest area of the seat is designed as flat, the knees of the passenger sitting on the seat hits the seat in front. Moreover, by sitting in this position, the passenger at the back may disturb the passenger in the front. Again, as the backrest area of the seat is flat, the knees of the passengers side by side may knock together. Additionally, especially the passenger on the window side may get stuck when s/he wants to get out in case of an emergency. Moreover, in the event of an accident, as the knees and feet of the passenger hit the seat, due to the backrest area being flat, the possibility of the passenger to get hurt may increase. Some applications regarding the state of the art were found in the patent research conducted regarding the passenger seat systems. One of these is the American application No. US20120119415. In this application plane seats are disclosed. In the back of said plane seat, there is an expanded polymer material cast in mold into the framework of the seat. In the application it is stated that an indent located on the back of the seat increases knee clearance. Said indent is not included in the structure of all the framework. An additional indent is formed on the back of the seat. Formed structure cannot be used in all types of passenger seats. Moreover, the formed indent may cause the passenger in the back to disturb the passenger in the front.

Another application regarding the passenger seat systems is the Korean application No. KR1020100060339. In this application, a compartment which protects the knees of the passenger from injuries in case of an accident or while seating is disclosed. It is clear that said compartment is mainly used in passenger vehicles. The application is not a seat structure on its own, and by developing the compartment, the injury of passenger's knees is prevented and comfort is increased.

Another application regarding passenger seats is the German application No. DE3842733C2. In this application, a passenger seat, a section of the backrest of which can be opened, is disclosed. The passenger opens approximately the back section of the seat in front forwards and get into resting position by stretching his/her legs through this gap. This way, a comfortable travel is made possible. However, this system, which is realized by opening a part of the seat in front forwards, does not work when there is a passenger in the seat in front. Moreover, it can be stated that due to the position the passenger is in, it is not very safe.

Another application regarding the passenger seat systems is the application No. ES479172A1. In this application, a passenger seat which can be locked in various positions and thus the knee clearance of which can be adjusted is disclosed. However, the backrest sections of the seats stated in the system are flat and there is not an inclination. The system operates only by bringing the backrest section of the seat into different positions and locking.

As a result, improvements are being made in passenger seat systems and thus, novel embodiments which will eliminate the disadvantages mentioned above and present solutions to existing systems are required.

### Object of the Invention

The invention relates to a passenger seat embodiment which meets the requirements mentioned above, eliminates all the disadvantages and presents additional advantages.

The object of the invention is to increase the clearance when the passenger is seated by means of producing the passenger seat as inclined contrary to the existing seats. This way, it is aimed to increase the clearance between the two passenger seats and the knee clearance of the passenger with the seat in front. This way, it is aimed to maximize the comfort level.

An object of the invention is to provide adequate movement space for the passengers, especially those in the window side, to get out of the seat in case of an emergency by producing the backrest section of the passenger seat as inclined contrary to the existing seats. This way, it is aimed to increase safety in emergencies.

Another object of the invention prevent application of excessive force to the passenger in front by the knees of the passenger seated in the back when the knees hit the seat in front in the event of an accident by means of the inclination of the passenger seat. It is also aimed to minimize the injuries suffered on the knees and legs of the passenger seated in the back. It is aimed to increase life safety this way.

Another object of the invention is to increase the clearance between the seats when it is intended to place more seats into the limited area. It is aimed to increase comfort by this way.

Another object of the invention is to minimize the contact of especially the knees of the passengers seated side by side by means of the inclined structure of the back framework of the seat. It is aimed to prevent disturbing the passenger in front by the passenger seated at the back. It is aimed to increase comfort this way.

In order to realize the objects stated above, the passenger seat is aimed to comprise concave surfaces formed on the backrest area in the knee clearance corresponding to the knees of the passenger.

The newspaper rack parts to be mounted on the vehicle seat are aimed to comprise newspaper rack bottom mounting bracket to provide connection and fixing thereof to the vehicle seat from the bottom section.

The newspaper rack parts to be mounted on the vehicle seat are aimed to comprise newspaper rack top mounting bracket to provide connection and fixing thereof to the vehicle seat from the top section.

The service tables to be mounted on the vehicle seat are aimed to comprise right service connection bracket to provide connection and fixing thereof to the vehicle seat from the right side.

The service tables to be mounted on the vehicle seat are aimed to comprise left service connection bracket to provide connection and fixing thereof to the vehicle seat from the left side.

### Brief Description of the Figures

The present invention should be evaluated with the figures described below to ensure the best understanding of the embodiment and advantages together with the additional elements of the invention.
Figure 1 is the general view of the passenger seat.
Figure 2 is the general view of the backrest carcass structure.

### Reference Numbers

1. Backrest carcass structure
2. Seat backrest foam
3. Backrest carcass
3.1 Concave form
4. Mounting bracket
5. Bottom mounting bracket
6. Top mounting bracket
6.1 Angled surfaces
7. Right tray table connection bracket
8. Left tray table connection bracket
9. Bottom support profile
10. Movement axis
11. Support bracket
12. Handle connection bracket
13. Left foam support bracket
14. Right foam support bracket
15. Knee clearance
16. Concave surface
17. Backrest area
A- Passenger seat

### Detailed Description of the Invention

In this detailed description, the preferred embodiments of the backrest carcass structure (1) of the passenger seats used in vehicles which especially conduct passenger transportation such as plane, ship, bus according to the present invention are described only for the subject to be understood better without any limiting effect.

### General Structure of the System

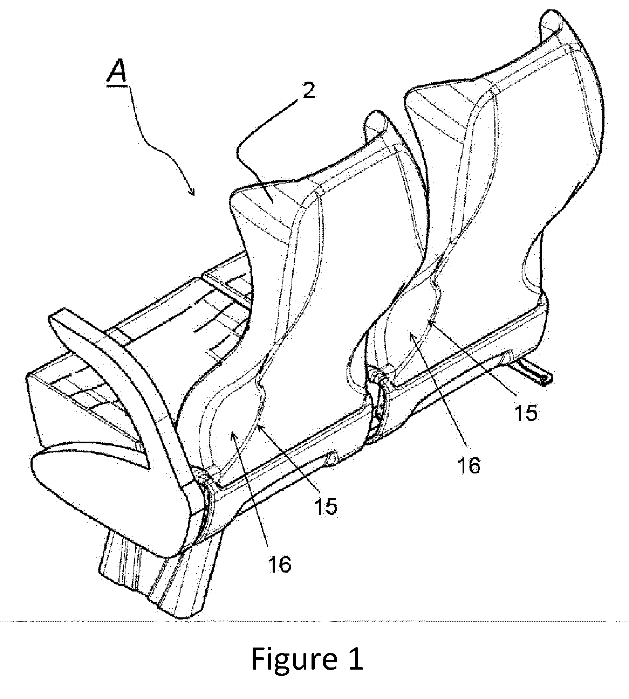

In Figure 1, the general view of the passenger seat (A) produced by using seat backrest carcass structure (1) is shown. Concave surfaces (16) are formed on the backrest area of said passenger seat in the knee clearance (15) corresponding to the knees of the passenger. Seat backrest foam (2) increases the comfort of passenger seat (A). The seat backrest foam (2) also seen in the figure is covered on the seat backrest carcass structure (1) by casting in mold. This way, all of the metal carcass framework is covered with foam. As no part of the backrest carcass structure (1) is exposed, this covering is conducted safely and effectively.

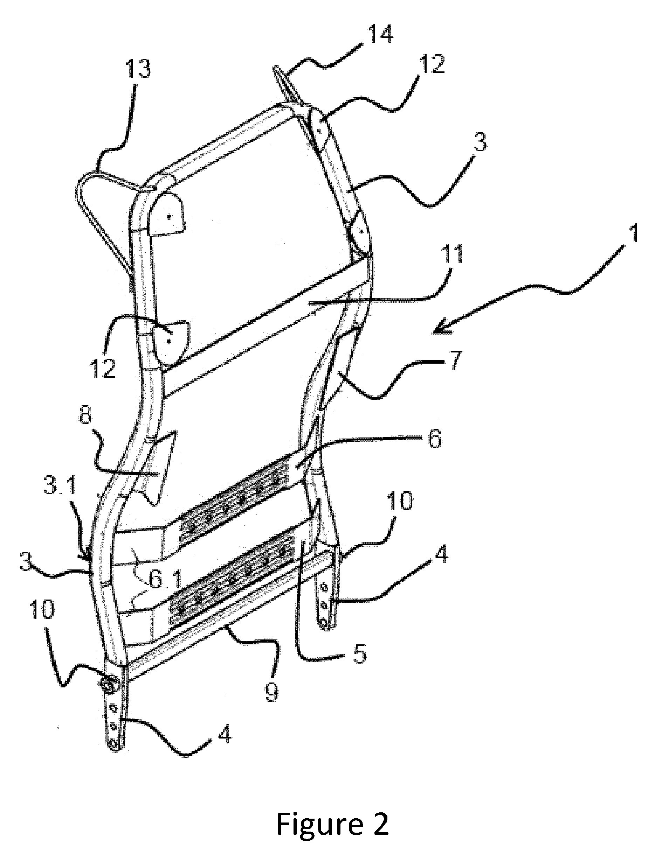

In Figure 2, the general view of the backrest carcass structure (1) located on the backrest area of the passenger seats (A) is shown. In this view, the most important element is the formation of concave forms (3.1) created on the area corresponding to said knee clearance (15) of backrest carcass (3). Likewise, top mounting bracket (6), which is connected to said concave form (3.1) and the area, corresponding to said knee clearance (15), thereof has angled surfaces (6.1) is formed. The backrest carcass (3) shown here can be defined as an element that immobilizes the passenger seat (A). Backrest carcass (3) is used for mounting seat backrest and other equipments. In order to increase the clearance between two seats, especially the sections at the knee level of the passenger are designed as inclined. The mounting of the backrest carcass (3) to the passenger seat (A) is conducted by means of the mounting bracket (4). Said mounting bracket (4) is used for fixing and mounting the backrest carcass structure (1) into the vehicle or to any other location. In the preferred embodiment of the system, the mounting bracket (4) is shaped as a bracket and made of metal.

Again in Figure 2, newspaper rack bottom mounting bracket (5) and the newspaper rack top mounting bracket (6) are shown. Newspaper rack bottom mounting bracket (5) is used for mounting the newspaper rack parts connected to the back section of the passenger seat (A) from the bottom section. In a preferred embodiment of the system, newspaper rack bottom mounting bracket (5) is made of sheet metal. Again, the newspaper rack top mounting bracket (6) is used for mounting the newspaper rack parts connected to the back section of the passenger seat (A) from the top section. In a preferred embodiment of the system, newspaper rack top mounting bracket (6) is made of sheet metal. Optionally, newspaper rack mounting brackets with various sizes and types can be designed and manufactured.

Again in Figure 2, the right service connection bracket (7) and the left service connection bracket (8) is shown. Right service connection bracket (7) provides connection and mounting of service tables from the right side and the left service connection bracket (8) provides the connection and mounting of service tables from the left side. In a preferred embodiment of the system, the right service connection bracket (7) and the left service connection bracket (8) are made of sheet metal. The bottom support profile (9) shown in the same figure is the profile supporting the backrest carcass structure (1) from bottom. By supporting the backrest carcass structure (1), bottom support profile (9) increases the durability and strength of the structure.

Again in Figure 2 the movement axis (10) is shown. Movement axis (10) is the centering part which enables reclining the backrest carcass structure (1) together with the bottom support profile (9). Backrest carcass structure (1) may recline or incline backwards and forwards by means of the movement axis (10). The support bracket (11) again shown in the same figure is used in order to conserve the form of the foam on the backrest carcass structure (1) and to make it strong. The handle connection brackets (12) seen on four sides right above the support bracket (11) are used for connection and mounting of the handles to the passenger seat (A).

In Figure 2, left foam support bracket (13) and right foam support bracket (14) are also seen. The left foam support bracket (13) is used in order to conserve the form of the foam of the front left headrest on the backrest carcass structure (1) and to make it strong. The right foam support bracket (14) is used in order to conserve the form of the foam of the front right headrest on the backrest carcass structure (1) and to make it strong.

### Operation of the System

In order to become ready for use as the passenger seat (A), the seat backrest carcass structure (1) must be subjected to some processes. First, the backrest carcass structure (1), backrest carcass (3), mounting bracket (4), newspaper rack mounting brackets, service connection brackets and other equipment must be welded to each other. Then, casting foam in mold on the formed backrest carcass structure (1) is conducted. The foams of the seat, on which foam was cast, are covered with fabric or leather optionally. This way, the seat backrest carcass structure (1) on which foam was cast is formed into a passenger seat (A). In this condition, after the necessary mountings of the passenger seat (A) are conducted by means of the mounting bracket (4) and other necessary brackets, it becomes ready for use. Passenger seats (A) comprising various sizes of backrest carcass structure (1) can be designed optionally. The passenger seat (A) formed can be connected in intended location by means of the mounting bracket (4).

Said backrest carcass structure (1) is designed as inclined in order to increase the clearance between two seats and the knee clearance. This way, it is provided that the passenger sitting on the seat is comfortable, does not disturb the passenger in front and evacuation of the passengers in case of an emergency can be done easily. The backrest carcass structure (1) which is designed as inclined and which increases the clearance between two seats provides the advantages below:
- As a result of the production of the passenger seat (A) as inclined contrary to the existing seats, the clearance with the seat in front when the passenger is seated is increased. This way, the clearance between the two passenger seats (A) and the knee clearance of the passenger with the seat in front are increased and the level of comfort is maximized.
- Adequate movement space for the passengers, especially those in the window side, to get out of the seat in case of an emergency is provided by producing the backrest section of the passenger seat (A) as inclined contrary to the existing seats. This way, safety is increased especially in emergencies.
- By means of the inclination of the passenger seat, excessive force is not applied to the passenger in front by the knees of the passenger seated in the back when the knees hit the seat in front in the event of an accident. Also, the injuries suffered on the knees and legs of the passenger seated in the back are minimized. This way, life safety is increased.
- When it is intended to place more seats into the limited area, the clearance between the seats is increased and thereby comfort level is increased.
- By means of the inclined structure of the back framework, the contact of especially the knees of the passengers seated side by side is minimized. The passenger seated in the back does not disturb the passenger in front. This way, comfort is increased.

As can be seen, a backrest carcass structure (1) with inclined structure forms a safe and comfortable passenger seat (A). Moreover, various forms of backrest carcass structure (1), and thus passenger seat (A), can be produced in accordance with the area of use.

## Claims

1. A passenger seat (A) backrest carcass structure (1) comprising bottom support profile (9) which increases the strength of the framework structure by supporting the framework structure of the passenger seat (A) from bottom; movement axis (10) allowing the use of the vehicle seat in intended inclination by moving the vehicle seat forwards and backwards (10); and support bracket (11) strengthening the foam covered on the framework structure, **characterized in** further comprising;
- concave surfaces (16) formed on the backrest area of said passenger seat (A) in the knee clearance (15) corresponding to the knees of the passenger.

2. The backrest carcass structure (1) according to Claim 1, **characterized in** comprising a concave form (3.1) created on the area corresponding to said knee clearance (15) of backrest carcass (3).

3. The backrest carcass structure (1) according to Claim, **characterized in** comprising a top mounting bracket (6) which is connected to said concave form (3.1) and the area, corresponding to said knee clearance (15), thereof has angled surfaces (6.1).

4. The backrest carcass structure (1) according to Claim 1, **characterized in** comprising a mounting bracket (4), which provides connection and fixing of said backrest carcass structure (1) to intended location, and which is located on said carcass (3).

5. The backrest carcass structure (1) according to Claim 1, **characterized in** comprising newspaper rack bottom mounting bracket (5) to provide connection and fixing of the newspaper rack parts to be mounted on the vehicle seat from the bottom section.

6. The backrest carcass structure (1) according to Claim 1, **characterized in** comprising right service connection bracket (7) providing connection and fixing of the service tables to be mounted on the vehicle seat from the right side of the vehicle seat.

7. The backrest carcass structure (1) according to Claim 1, **characterized in** comprising left service connection bracket (8) providing connection and fixing of the service tables to be mounted on the vehicle seat from the left side of the vehicle seat.
